# EUROPEAN PATENT APPLICATION

(11) **EP 1 918 685 A1**
(43) Date of publication of application: **07.05.2008**
(21) Application number: 07425630.6
(22) Date of filing: 09.10.2007
(51) Int. Cl.: G01K 11/32, G01K 5/48

(54) **System for detecting and localizing temperature variations and method**

(30) Priority: 09.10.2006 IT RM20060542
(71) Applicant: Sielte S.p.A., 95027 San Gregorio di Catania (CT) (IT)
(72) Inventor: Silvestrini, Stefano, Sielte S.p.A., 00128 Roma (IT); Alimenti, Filippo, Sielte S.p.A., 00128 Roma (IT)
(74) Representative: Iannone, Carlo Luigi

(57) **Abstract**

The present invention relates to system (1) for detecting and localizing temperature variations comprising at least an optic fibre cable (2) placed within an area or along a path to be monitored for localization of temperature variations; and transceiving means (3, 4, 8), connected with said optic fibre cable (2), said transceiving means (3, 4, 8) injecting a reference optical signal within said optical fibre cable (2); characterised in that it comprises actuation means (6) suitable to interact with said at least one optic fibre cable (2), said actuation means (6), due to the increase of temperature of the surrounding environment beyond an activation thermal threshold, exerting a mechanical stress on said at least one optic fibre cable (2), realising a curvature on the same; and detection means (5, 8) for said reference signal connected with said transceiving means (3, 4, 8), said detection means (5, 8) measuring power of said reference optical signal.

The present invention further relates to a method for detecting and localising temperature variations.

## Description

The present invention relates to a system for detecting and localizing temperature variations and relevant method.

More specifically, the invention concerns a system for detecting temperature variations along an optic fibre cable due to induced mechanical stresses, permitting localizing the point of the cable where said thermal variation occurred.

As it is well known, it is necessary localising and individuating dangerous fires or temperature raising beyond set thresholds in different sectors and installations, such as e.g. in petrochemical systems, high and very high voltage systems, along road and railway galleries, subways or multipurpose underground passage.

It is also often suitable in the above environments localising the proper fire point, so as to permit an immediate safety intervention.

A rather promising technology for controlling temperature within large rooms is that employing optic fibres. Particularly, different methods are presently employed for detection of temperature by optic fibre cables.

A first solution is included in the category of the so-called OTS *(Optical Temperature Measurements)* systems.

Said systems are based on a continuous detector at the spatial level, comprised of a doped quartz optic fibre cable of the multimode type, in which a suitable light source (typically a Laser) injects a signal.

In every point of the optic fibre cable, due to the shocks of the light quanta with molecules, a small part of injected energy elastically diffuses, thus generating optical radiations at the same frequency of the incident light (Rayleigh scattering).

An even smaller part of the radiation is instead diffused anelastically, giving or acquiring energy during interaction with crystal lattice molecules.

Energy cession produces, within the spectrum, radiation with a lower frequency of the incident light (stokes radiation). Instead, acquisition of energy produces higher frequency lines (antistokes lines).

Stokes band is independent - in amplitude - from temperature of crystal lattice wherein interaction occurred, contrary to the antistokes band, which is independent from temperature.

Consequently, an instrument permitting evaluating amplitude of lines in both bands, by their ratio, can determine temperature at the point under examination.

Selection of points along the fibre, bringing then to the determination of distance of the same points from the light source, is carried out through known techniques of optical time domain reflectometer, the same employed in measurement instruments usually employed in the installation, verification and monitoring sector for optic fibre cables, known as OTDR *Optical Time Domain Reflecfometer).*

The above solution, permitting continuously localizing at the spatial level the optical fibre cable section in which the temperature variation occurred, either said section is of the punctiform/concentrated type and/or distributed, is at present one of the most diffused technologies.

However, said solution is expensive and does not permit monitoring length longer than some kilometres, due to the type of multimode optic fibre employed.

Furthermore, safety systems are known, employing shape memory metallic alloys properties. One example of this system is described in the Italian patent application n° GE2004A000003, wherein a mechanism is described for opening of a mechanical door, including an actuating elastic element comprised of a shape memory alloy.

Due to a temperature increase, shape memory alloy changes its status, thus door opens, permitting outlet of smokes.

However, this kind of device does not permit either monitoring or detection of a possible fire within zones having large dimensions.

In view of the above, it is an object of the present invention that of suggesting a system for detection and localization of temperature threshold variations permitting overcoming the drawbacks of the known technique.

It is therefore specific object of the present invention a system for detecting and localizing temperature variations comprising at least an optic fibre cable placed within an area or along a path to be monitored for localization of temperature variations; and transceiving means, connected with said optic fibre cable, said transceiving means injecting a reference optical signal within said optical fibre cable; characterised in that it comprises actuation means suitable to interact with said at least one optic fibre cable, said actuation means, due to the increase of temperature of the surrounding environment beyond an activation thermal threshold, exerting a mechanical stress on said at least one optic fibre cable, realising a curvature on the same; and detection means for said reference signal connected with said transceiving means, said detection means measuring power of said reference optical signal.

Always according to the invention, said actuation means can comprise at least an actuator device coupable with said at least one optical fibre cable, said at least one actuator device, due to the increase of the temperature in the surrounding environment beyond said activation thermal threshold, activating exerting a mechanical stress on said at least one optic fibre cable, realising a curvature on the same cable.

Preferably, according to the invention, said system can comprise a plurality of actuator devices provided in correspondence of a plurality of points of said at least one optic fibre cable, and particularly, a plurality of actuators that can be activated at a plurality of activation thermal thresholds.

Still according to the invention, said at least one actuator device can comprise an activation element comprised of a memory shape alloy, said memory shape alloy passing from the austenitic phase to the martensitic phase when it is subjected to said activation thermal threshold, said memory shape alloy being for example a Nickel - Titanium (NiTinol) alloy.

Furthermore, according to the invention, said at least one actuator device can comprise a temperature sensor, connected with mechanical operation means coupable with said at least one optical fibre cable, said temperature sensor, due to the detection of a temperature higher than said activation thermal threshold, actuating said mechanical operation means.

Always according to the invention, said transceiving means can comprise optical emission means, connected at one end of said at least one optic fibre cable, and receiving means, connected at another end of at least one optic fibre cable.

Still according to the invention, said optical emission means can comprise at least a LED (Light Emitting Diode) or a Laser.

Furthermore according to the invention, said receiving means can comprise at least a photodiode.

Advantageously according to the invention, said detection means comprise at least a unit measuring power that can be connected with said receiving means.

Preferably, according to the invention, said detection means can comprise an optical time domain reflectometer (OTDR) connected with said receiving means.

Always according to the invention, said transceiving means can comprise an optical time domain reflectometer connected with an en of said at least one optic fibre cable, said optical time domain reflectometer injecting a reference signal in said at least one optic fibre cable and detecting power of said retro-diffuses reference signal, localising the point of said at least one optic fibre cable where mechanical stress was exerted.

Still according to the invention, said system can comprise optical coupling means interposed between said at least one optic fibre cable and said transceiving means.

Furthermore, according to the invention, said optical coupling devices can comprise at least an optical connector and/or an optical joint and/or an optical WDM (*Wavelength Division Multiplexer*) with two wavelengths and/or a 1 x2 optical switch and/or and ON/OFF optical switch and/or a pass band-filter.

Advantageously according to the invention, said system can comprise one control unit connected with said transceiving means and with said detection means, said control unit, due to the reduction of the reference optical signal power detected by said detection means, signalling presence of a possible danger by analyses of one or more control parameters.

Always according to the invention, said parameters can comprise value of stress on said optical fibre cable, on the basis of verification that said value is not higher than at least one threshold, said threshold being the range ± sigma_N, N being the number of alarm thresholds that can be monitored corresponding to N temperature thresholds.

Furthermore, according to the invention, said parameters can comprise a measure of stress recurrence within a time unit.

Still according to the invention, said system can comprise storage means to memorize data measured by said detection means.

Advantageously, according to the invention, said system can comprise a plurality of optic fibre cables; a commutator connected with said plurality of optic fibre cables and with said transceiving means by a further optic fibre cable, said commutator being suitable to commutate said further optic fibre cable with said plurality of said optic fibre cable, permitting monitoring of said plurality of said optic fibre cable.

Preferably, according to the invention, said reference optical signal can have a wavelength within one of the following optical ranges or transmission bands: 800 - 900 nm; 1260 - 1360 nm; 1525 - 1565 nm; 1565 - 1625 nm; 1625 - 1675 nm.

Furthermore, according to the invention, said optic fibre cable can be of the single mode or multimode type.

It is further object of the present invention a method for detecting and localizing temperature variations, characterised in that it comprises the following steps:
a) measuring level of signal received in correspondence of one end of an optic fibre cable;
b) comparing power of said reference optical signal for the received signal with the power of the reference signal originally stored during the system initialisation step without mechanical stresses on said optic fibre cable; and
c) analysing the result in case it is different with respect to one or more set thresholds of one or more parameters, following the presence of one or more stresses induced on said optic fibre cable.

Always according to the invention, said method can comprise the data storage step measured during step (a) between said step (a) and said step (b).

Still according to the invention, said parameters can comprise value of stress on said optic fibre cable, on the basis of ascertainment that said value is not higher than at least one threshold, said threshold being the range ± sigma_N, N being the number of alarm thresholds that can be monitored corresponding to N temperature thresholds.

Furthermore, according to the invention, said parameters can comprise a measure of stress recurrence within a time unit.

Preferably, according to the invention, said method can comprise the further step: (d) activating function of localization of mechanical stress on said at least one optic fibre cable.

Still according to the invention, localization operation of mechanical stress on said at least one optic fibre cable is carried out by an optical reflectometer within the time domain,

Furthermore, said method can comprise the further step: (e) storing detected data.

Always according to the invention, said method can comprise the further step: (f) activating an alarm signal.

Advantageously, according to the invention, said method can transmit said alarm signal to an operator, or to an alarm system/managing unit.

The present invention will be now described, for illustrative but not limitative purposes, according to its preferred embodiments, with particular reference to the figures of the enclosed drawings, wherein:
figure 1 shows a first embodiment of the system for detecting and localizing temperature variations according to the present invention;
figure 2 shows the system of figure 1 in a detection mode;
figure 3 shows a third embodiment of system for detecting and localizing temperature variations according to the present invention;
figure 4 shows the system of figure 3 in a detection mode;
figure 5 shows a scheme of a fourth embodiment of the system according to the invention;
figure 6 shows a scheme of a fifth embodiment of the system according to the invention;
figure 7 shows a scheme of a sixth embodiment of the system according to the invention;
figure 8 shows a scheme of a seventh embodiment of the system according to the invention; and
figure 9 show a flow chart of the method for detecting and localizing temperature variations according to the present invention.

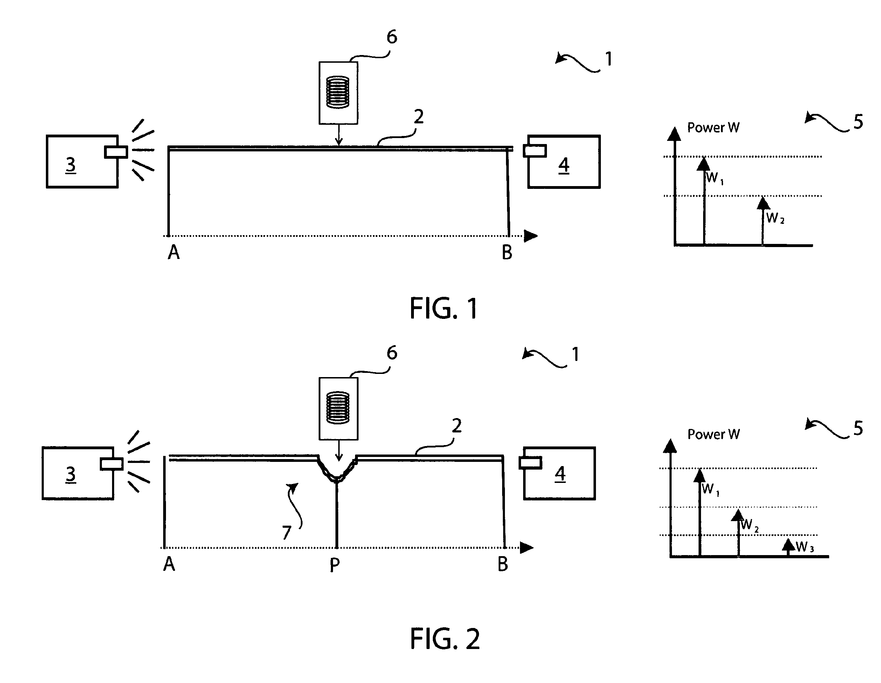

Making reference to figures 1 and 2, it is possible understanding operation of system 1 according to the present invention.

It is noted an optic fibre cable, at the ends A and B of which a light source 3, that can be comprised of a LED or of a laser, able injecting a reference signal in the optic fibre 2 with a W₁ power, and a photodiode 4, as optical receiving unit, are coupled.

Photodiode 4 is connected to a power measurement unit 5. An actuator 6 is coupled with the optic finer cable 2. said actuator 6, due to a possible increase of the surrounding temperature, is able to exert a mechanical stress on the optic fibre cable 2.

Lacking the mechanical stress on the optic fibre cable 2, reference signal arriving from the light source 3 reaches point B of the same optic fibre 2, thus to the photodiode 4, with a power W₂ < W₁, due to attenuation of the same optic fibre cable 2.

Said attenuation is due to energy losses caused by absorption and scattering phenomenon of optic fibre cable 2.

Photodiode 4 is device able detecting signal level (power) arriving to point B of optic fibre cable 2.

Figure 2 is a scheme of the reference signal transmission mode according to the present invention, in case of a mechanical stress induced on the optic fibre cable 2 by temperature variations.

Mechanical stress on optic fibre cable 2 can be practically assimilated to a curvature 7 in a point P of the same cable. Signal emitted with a W₁ power from light source 3 in point A reaches point B with power W₃ lower than previous power W₂, due to further attenuation caused by stress, as it can be noted observing power measurement unit 5.

In fact, curvature of an optic fibre cable, as known, causes a reduction of the transmitted signal level reduction, since part of the radiation propagating along the fibre, due to the shape of the fibre in point P, where stress occurs, affects on fibre CORE/CLADDING separation interface with a not optimal signal, thus exiting from core of the same fibre.

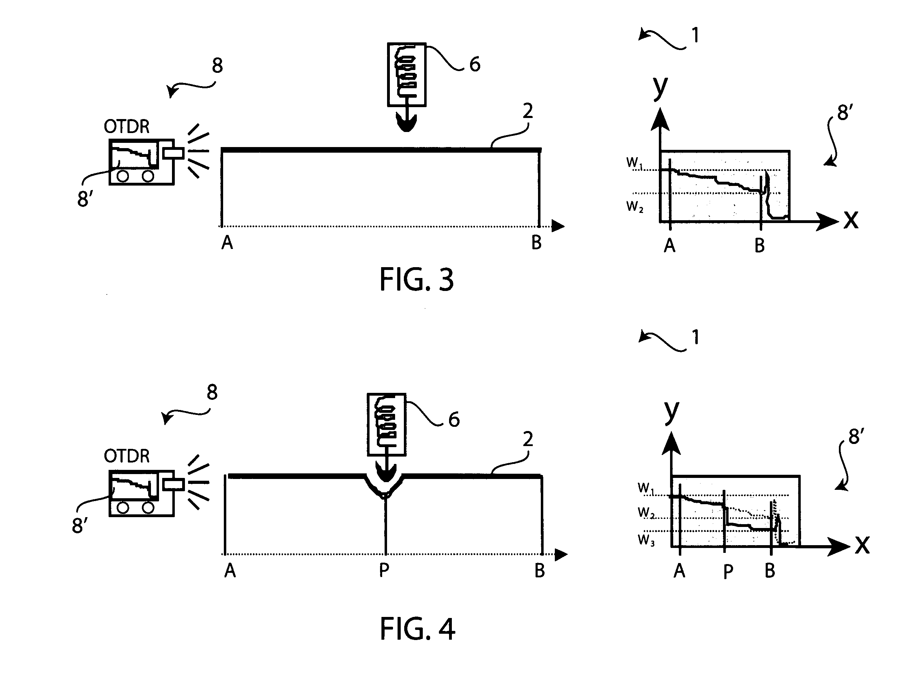

Figure 3 shows a second embodiment of the present invention. In this case, an optical time domain reflectometer is coupled with one end of the optic fibre cable as transceiving unit of the reference signal. Form the figure it is observed also trace of signal 8' from optical time domain reflectometer.

Optical time domain reflectometer 8 or OTDR is an instrument provided of its own laser and its own photodiode. It is further able showing on its own display and/or on another display 8' light power backscattered for scattering (Y axis) as a function of distance (X axis).

Figure 4 shows transmission and reception mode of an optic reflectometer 8 in presence of a mechanical stress exerted by actuator 6 due to increase of temperature beyond a set threshold.

The Analysis of backscattering curves acquired by optic reflectometer 8 permits individuating at a spatial level position of mechanical stress along optic fibre cable 2. Thus, by application of a plurality of sensors 6 placed along the optic fibre cable 2, it is not necessary including an electric connection on actuators 8 in order to know the point where temperature increased and thus a fire could have occurred.

Optic reflectometer 8 can immediately give the above information. In other words, by the measurement of backscattering energy, optic reflectometer individuates spatial abscissa where mechanical stress induced by actuator 6 occurs.

Actuator 6 can be of different kinds. For example, it is possible considering a device comprising a support and a compressed spring by a thermo sensitive material. In case room temperature reaches a critical value, so that material melts, spring is no more retained, can extend and locally bent optic fibre cable 2 exerting mechanical stress.

The above kind of actuator 6 is of the irreversible kind, requiring, in case of activation, its replacement or a manual restoration.

A further preferred embodiment of an actuator 6 can comprise mechanical components made up of plastic or metallic shape memory form materials, the metallic ones passing, due to the temperature, from a martensitic to an austenitic phase. A kind of shape memory alloy that can be employed for realising actuators 6 for present invention is NiTinol (Nickel - Titanium alloy).

By the above actuators, it is possible realising a temperature control system 1 completely dielectric, reversible, with a diffused sensor systems and really economic with respect to a traditional optic fibre system.

System 1 can analyse and process attenuation variations of a reference optical signal transmitted along either single mode or multimode standard optic fibre cables 2.

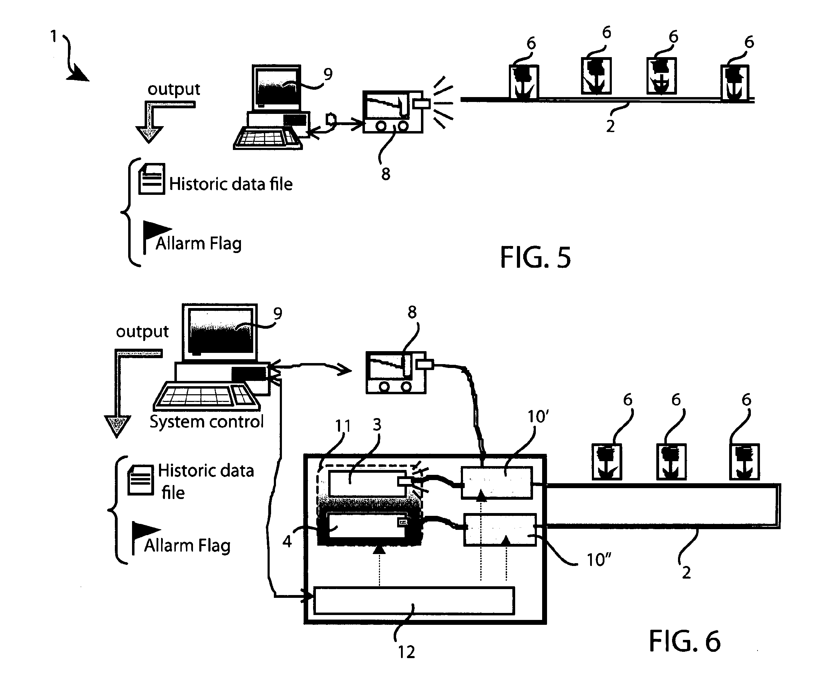

Analyses and processing of said signal makes available a warning or *early warning* linked to possible thermal increase of the environment subjected to monitoring and due to potential fire risk. Moreover, system 1 can be connected with standard fire control and managing systems. Making reference to figure 5, it is noted presence of a plurality of actuators 6 along the transmission line 2, to which optical reflectometer is connected. The latter is connected with a control unit 9.

Optic reflectometer 8 continuously acquires backscattering trace of optic fibre cable 2, that is continuously processed by control unit 9. Data acquired by optic reflectometer 8 are always compared with a reference backscattering curve, obtained starting from optic fibre cable 2 with all deactivated actuators 6.

In case comparison with reference curve signals presence of a stress, a warning signal is generated by control unit 9, maintaining a historical file of detected data.

Managing of warning signals can be local or remote, i.e. system 1 control unit 9 can autonomously decide taking actions or it can simply communicate by a network connection to a remote unit supervising the event occurred.

In the present embodiment, optic reflectometer 8 transmits reference optical signal at a set wavelength, preferably chosen within the following optical ranges or transmission bands: 800 - 900 nm; 1260 - 1360 nm; 1525 - 1565 nm; 1565 - 1625 nm; 1625 - 1675 nm.

Making now reference to figure 6, it is possible observing a fifth embodiment of the system 1 according to the invention.

This system 1 comprises an optic fibre cable 2 connected with a ring placed in the area to be analysed. A first and a second coupling devices 10, 10' are connected with a transmission/photodetection card 11 wherein light source 3 and photodiode 4 are placed.

An optic reflectometer 8 is connected with coupling device 10' and with control unit 9.

This embodiment provides a frame 12 wherein card interfacing with control unit 9, transmission/photodetection card 11 and the above coupling devices 10, 10' are housed.

When an actuator 6 is actuated (following a thermal variation) photodiode 4, placed at one end of the optic fibre cable 2 records a variation of level of power sent from light source provided at the other end.

By the present configuration, optical reflectometer 8 is only actuated to individuate stress by standard comparison of the backscattering curves.

Coupling device 10' permits to optical reflectometer 8' to inject its own signal within fibre, while another coupling device 10" insulates photodiode 4 placed on the same card with respect to the optical photodiode 8.

As an alternative, photodiode 8 insulation can be made available by its deactivation by the system1 control unit 9.

The above described architecture, even being more expensive with respect to the architecture of figure 5, makes optical reflectometer Mean Time Between Failure longer, said optical reflectometer being a precise but expensive instrument, making it easily replaceable optical signal generation and detection components in case of wear or failure, simply replacing a card. Furthermore, in the present embodiment, it is possible providing a better safety with respect to the whole system performances, since a possible, but always limited, periodic activation of optical reflectometer 8 permits a continuous comparison between results provided by the latter and those of the photodetection card 11.

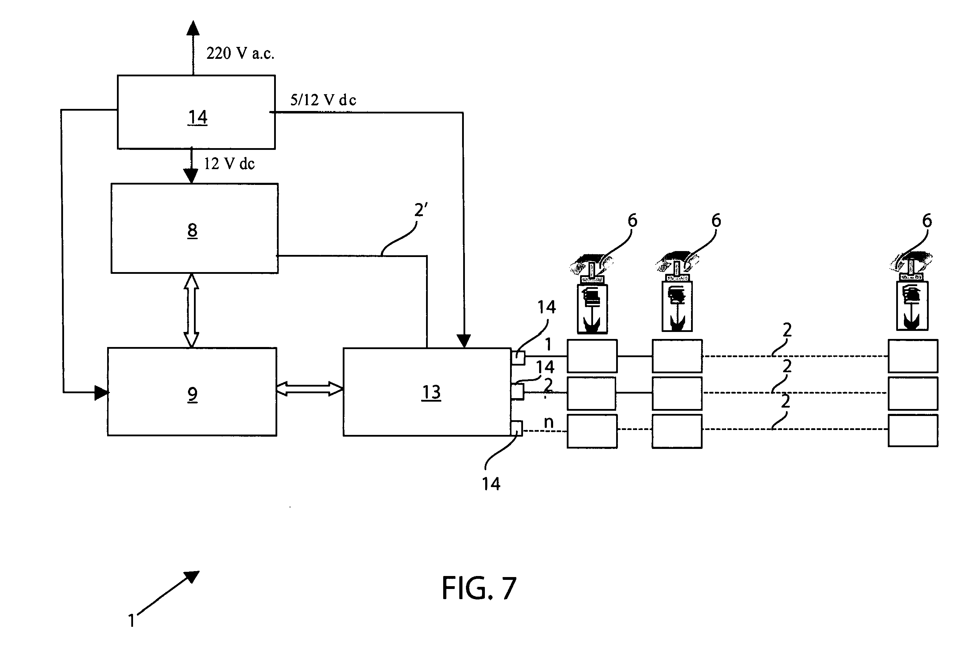

Figure 7 shows a scheme of a sixth embodiment of the system 1 according to the invention, by which it is possible monitoring more than one optic fibre cable 2, using an optical commutator 13 coupled with a plurality of optic fibre cables 2 by a corresponding connector 14.

Said optical commutator 13 periodically commutes each optic fibre 2 to an optic fibre cable 2' connected with the optical reflectometer 8.

Actuators 6 are applied to the different optic fibres 2, actuated at the same or at different temperatures. Thus, it is possible considering at the same time a plurality of temperature thresholds, thus obtaining information about dynamic of room temperature variations.

From the figure, it is observed also presence of a stabilised supply unit 15, providing continua supply current to the optical reflectometer 8, to optical commutator 13 and to control unit 9.

It is noted that said optical commutator 13 is connected and controlled by said control unit 9

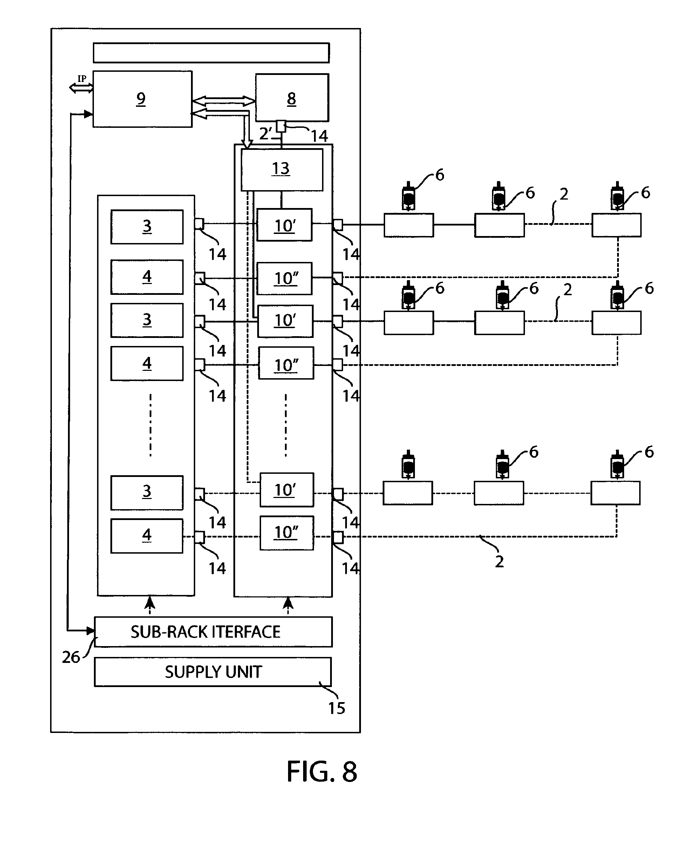

Finally, figure 8 shows a further embodiment of the present invention.

The architecture shown is suitable for monitoring system having a complex topology.

System 1 includes a plurality of optical fibres 2 on which actuators 6 are placed.

Each optic fibre 2 is connected by optical connectors 14 and optical couplers 10', 10", respectively corresponding to light source 3 and photodiode 4.

Optical commutator 13 is connected to couplers 10', periodically commutes each optic fibre cable 2 to an optic fibre cable 2' connected with an optical reflectometer 8, so that the latter can periodically detect backscattering.

Control unit 9 is connected to optic reflectometer 8, to optical commutator 13 and to an interface 12, which is connected to a first integrated unit, comprising the plurality of light sources 3 and photodiodes 4, and to a second integrated unit comprising couplers 10', 10" and optical commutator 13.

In case an alarm occurs following to the activation of an actuator 6, optical reflectometer 8 is activated for necessary spatial localisation of the point of the fibre cable 2 where the increase of temperature occurred.

This embodiment has the advantage of determining spatial position of stress along the optic fibre cable 2, without requiring the continuous use of optical reflectometer 8.

Connections of control unit 9 with other parts of system 1 occur by standard RS232, GP-IB, TTL cables.

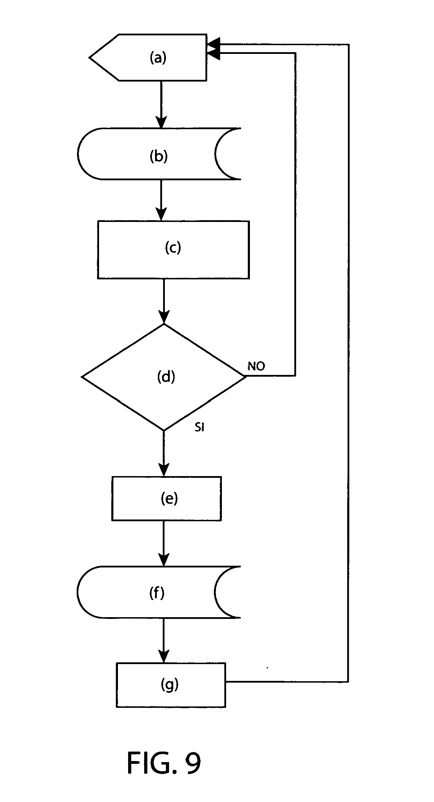

Figure 9 is a flow chart of the detection and localisation method for temperature variations according to the present invention.

The above method is based on processing of optical signals transmitted through optic fibre cables 2 and includes the following steps:
a) measuring level of signal received in correspondence of one end of an optic fibre cable 2;
b) storing data measured during step a);
c) comparing received and stored signal with reference signal originally stored during the system 1 initialisation step without mechanical stresses on said optic fibre cable so as to obtain possible information about attenuation variations occurred during the transmission within the optical fibre cable 2;
d) analysing the result in case it is different with respect to one or more set thresholds, following the presence of one or more stresses induced on said optic fibre cable 2. in case analyses has an negative outcome, method goes back to step a), otherwise it goes to the following step e);
e) activating function of localization of mechanical stress on said optic fibre cable 2 (e.g. by an optical reflectometer 8 or OTDR);
f) storing detected data;
g) activating an alarm signal to be transmitted to an operator, or to an alarm system/managing unit.

Decisional criteria of the alarm event is based on the following parameters:
- stress entity: it verifies if its value is included within the range ± sigma_N, N being the number of alarm thresholds that can be monitored corresponding to N temperature thresholds. This parameter substantially indicates if optic cable bearing structure is subjected to more or less strong thermal stresses;
- stress recurrence within a time unit: this parameters informs if the reason of stress is due to a sporadic case, or, on the contrary, to a real cause of progressive raising of room temperature.

This information realise content of dynamic database, i.e. collection of events that gradually are on the detection system.

The same events are consequently evaluated on the basis of the static database containing information about system consistence, its type, historical alarm series, ecc., and finally, if necessary, suitable intervention action are made.

Instead, lacking stresses induced on the optic fibre cable 2, result of comparison described in step @ brings again the system 1 in its standard condition, without any alarm.

Among the advantages of the present invention, taking into consideration that the optic fibre cable employed is a dielectric transmission means, that actuators employed are of the passive, reversible kind, and thus not needing electric supply, there is that it is possible using the system according to the invention for all those applications having as a principal feature either the dielectric features of optic fibres, and the passive nature of a distributed sensor network, among which: immunity of electromagnetic and radio frequency interferences; elimination of explosion and fire risk within deflagrating atmosphere due to electric discharge; elimination of induced mass coupling; elimination of short-circuit problems; elimination of not wished propagation of spurious signals and electric disturbs; lack of main supply.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. System (1) for detecting and localizing temperature variations comprising at least an optic fibre cable (2) placed within an area or along a path to be monitored for localization of temperature variations; and transceiving means (3, 4, 8), connected with said optic fibre cable (2), said transceiving means (3, 4, 8) injecting a reference optical signal within said optical fibre cable (2); **characterised in that** it comprises actuation means (6) suitable to interact with said at least one optic fibre cable (2), said actuation means (6), due to the increase of temperature of the surrounding environment beyond an activation thermal threshold, exerting a mechanical stress on said at least one optic fibre cable (2), realising a curvature on the same; and detection means (5, 8) for said reference signal connected with said transceiving means (3, 4, 8), said detection means (5, 8) measuring power of said reference optical signal.

2. System (1) according to claim 1, **characterised in that** said actuation means comprise at least an actuator device (6) coupable with said at least one optical fibre cable (2), said at least one actuator device (6), due to the increase of the temperature in the surrounding environment beyond said activation thermal threshold, activating exerting a mechanical stress on said at least one optic fibre cable (2), realising a curvature on the same cable.

3. System (1) according to claim 2, **characterised in that** it comprises a plurality of actuator devices (6) provided in correspondence of a plurality of points (P) of said at least one optic fibre cable (2).

4. System (1) according to claim 2 or 3, **characterised in that** it comprises a plurality of actuators (6) that can be activated at a plurality of activation thermal thresholds.

5. System (1) according to one of claims 2-4, **characterised in that** said at least one actuator device (6) comprises an activation element comprised of a memory shape alloy, said memory shape alloy passing from the austenitic phase to the martensitic phase when it is subjected to said activation thermal threshold.

6. System (1) according to claim 5, **characterised in that** said memory shape alloy is a Nickel - Titanium (NiTinol) alloy.

7. System (1) according to one of claims 2-4, **characterised in that** said at least one actuator device (6) comprises a temperature sensor, connected with mechanical operation means coupable with said at least one optical fibre cable (2), said temperature sensor, due to the detection of a temperature higher than said activation thermal threshold, actuating said mechanical operation means.

8. System (1) according to one of the preceding claims, **characterised in that** said transceiving means (3, 4, 8) comprise optical emission means (3), connected at one end (A) of said at least one optic fibre cable (2), and receiving means (4), connected at another end (B) of at least one optic fibre cable (2).

9. System (1) according to claim 8, **characterised in that** said optical emission means (3) comprise at least a LED (Light Emitting Diode).

10. System (1) according to claim 8, **characterised in that** said optical emission means (3) comprise at least or a Laser.

11. System (1) according to one of claims 8-11, **characterised in that** said receiving means comprise at least a photodiode (4).

12. System (1) according to one of claims 8-11, **characterised in that** said detection means comprise at least a unit (5) measuring power, connected with said receiving means (4).

13. System (1) according to one of claims 8-11, **characterised in that** said detection means comprise an optical time domain reflectometer (8) (OTDR) connected with at least an optic fibre cable (2).

14. System (1) according to one of claims 1 - 7, **characterised in that** said transceiving means comprise an optical time domain reflectometer (8) connected with an end (A or B) of said at least one optic fibre cable (2), said optical time domain reflectometer (8) injecting a reference signal in said at least one optic fibre cable (2) and detecting power of said backscattering reference signal, localising the point (P) of said at least one optic fibre cable (2) where mechanical stress was exerted.

15. System (1) according to one of the preceding claims, **characterised in that** said system comprises optical coupling means (10', 10") interposed between said at least one optic fibre cable (2) and said transceiving means (3, 4, 8).

16. System (1) according to claim 15, **characterised in that** said optical coupling devices (10', 10") comprise at least an optical connector and/or an optical joint and/or an optical WDM *(Wavelength Division Multiplexer)* with two wavelengths and/or a 1x2 optical switch and/or and ON/OFF optical switch and/or a pass-band filter.

17. System (1) according to one of the preceding claims, **characterised in that** it comprises one control unit (9) connected with said transceiving means (3, 4, 8) and with said detection means (5, 8), said control unit (9), due to the reduction of the reference optical signal power detected by said detection means (5, 8), signalling presence of a possible danger by analyses of one or more control parameters.

18. System (1) according to claim 17, **characterised in that** said parameters comprise value of stress on said optical fibre cable (2), on the basis of verification that said value is not higher than at least one threshold.

19. System (1) according to claim 18, **characterised in that** said threshold is in the range ± sigma_N, N being the number of alarm thresholds that can be monitored corresponding to N temperature thresholds.

20. System (1) according to one of claims 17 - 19, **characterised in that** said parameters comprise a measure of stress recurrence within a time unit.

21. System (1) according to one of claims 17 - 20, **characterised in that** it comprises storage means to memorize data measured by said detection means (5, 8).

22. System (1) according to one of the preceding claims, **characterised in that** it comprises a plurality of optic fibre cables (2); a commutator (13) connected with said plurality of optic fibre cables (2) and with said transceiving means (3, 4, 8) by a further optic fibre cable (2'), said commutator being suitable to commutate said further optic fibre cable (2') with said plurality of said optic fibre cable (2), permitting monitoring of said plurality of said optic fibre cable (2).

23. System (1) according to one of the preceding claims, **characterised in that** said reference optical signal can have a wavelength within one of the following optical ranges or transmission bands: 800 - 900 nm; 1260 - 1360 nm; 1525 - 1565 nm; 1565 - 1625 nm; 1625 - 1675 nm.

24. System (1) according to one of the preceding claims, **characterised in that** said optic fibre cable (2) is of the single mode type..

25. System (1) according to one of the preceding claims 1 - 23, **characterised in that** said optic fibre cable (2) is of the multimode type.

26. Method for detecting and localizing temperature variations, **characterised in that** it comprises the following steps:
a) measuring level of signal received in correspondence of one end (A or B) of an optic fibre cable (2);
b) comparing power of said reference optical signal for the received signal with the power of the reference signal originally stored during the system (1) initialisation step without mechanical stresses on said optic fibre cable (2); and
c) analysing the result in case it is different with respect to one or more set thresholds of one or more parameters, following the presence of one or more stresses induced on said optic fibre cable (2).

27. Method according to claim 26, **characterised in that** it comprises the data storage step measured during step (a) between said step (a) and said step (b).

28. Method according to one of claims 26 or 27 **characterised in that** said parameters comprise value of stress on said optic fibre cable (2), on the basis of ascertainment that said value is not higher than at least one threshold.

29. Method according to claim 28, **characterised in that** said threshold in the range ± sigma_N, N being the number of alarm thresholds that can be monitored corresponding to N temperature thresholds.

30. Method according to one of claims 26 - 29 **characterised in that** said parameters comprise a measure of stress recurrence within a time unit.

31. Method according to one of claims 26 - 30 **characterised in that** it comprises the further step:
(d) activating function of localization of mechanical stress on said at least one optic fibre cable.

32. Method according to claim 31, **characterised in that** localization operation of mechanical stress on said at least one optic fibre cable (2) is carried out by an optical time domain reflectometer.

33. Method according to one of claims 26 - 32, **characterised in that** it comprises the further step:
(e) storing detected data.

34. Method according to one of claims 26 - 33 **characterised in that** it comprises the further step:
(f) activating an alarm signal.

35. Method according to claim 34 **characterised in that** it transmits said alarm signal to an operator, or to an alarm system/managing unit.

36. System (1) and method according to each one of the previous claims, substantially as illustrated and described.
